# EUROPÄISCHE PATENTSCHRIFT

(11) **EP 1 881 472 B1**
(45) Veröffentlichungstag und Bekanntmachung des Hinweises auf die Patenterteilung: **21.01.2009**
(21) Anmeldenummer: 07012942.4
(22) Anmeldetag: 02.07.2007
(51) Int. Cl.: G09F 7/06, F16B 13/02, F16B 13/12, F16B 21/20, F16D 55/00

(54) **Befestigung des Firmenmarkenzeichens an dem Bremssattel einer Scheibenbremse**
Fastening device for attaching a company emblem plate to a disc brake caliper
Fixation de plaquette de marque sur un étrier de frein à disque

(30) Priorität: 18.07.2006 DE 102006033240
(43) Veröffentlichungstag der Anmeldung: 23.01.2008
(73) Patentinhaber: Lucas Varity s.r.o., 46601 Jablonec Nad Nisou (CZ)
(72) Erfinder: Jakoubek, Vaclav, 463 11 Liberec 30 (CZ)
(74) Vertreter: Röthinger, Rainer

(56) Entgegenhaltungen:
- EP-A2- 0 335 803
- WO-A-03/020555
- DE-A1- 10 027 783
- DE-A1- 19 803 918
- DE-A1-6102004 048 43
- FR-A1- 2 724 893
- US-A- 3 768 845

## Beschreibung

### Gebiet der Erfindung

Die Erfindung betrifft die Befestigung des Firmenmarkenzeichens an dem Bremssattel einer Scheibenbremse, insbesondere die schraubenlose Befestigung eines gegossenen Firmenmarkenzeichens an den Brückenfingern eines Schwimmsattels einer Schwimmsattel-Teilbelag-Scheibenbremse.

### Hintergrund der Erfindung

Werden bei Fahrzeugen unter ästhetischen Gesichtspunkten Radfelgen verwendet, die als Speichenfelgen ausgebildet sind, so ist der Blick durch die Felge auf die Bremse ebenfalls von Bedeutung für den ästhetischen Gesamteindruck.

In der deutschen Offenlegungsschrift DE 10 027 783 A1 ist die Befestigung eines Firmenmarkenzeichens an den Brückenfingern eines Schwimmsattels beschrieben. Ein wesentlicher Teil der dort beschriebenen Befestigung besteht darin, daß mittels geeigneter Mittel, beispielsweise Kerbnägel, das Firmenmarkenzeichen an mechanisch eben bearbeiteten Flächen befestigt wird. Das Firmenmarkenzeichen ist bei dieser Ausführung auf einem Halteblech angebracht, auf das Halteblech auflackiert oder auch in das Halteblech eingeprägt.

War bei dieser Befestigung des Firmenmarkenzeichens auch Wert darauf gelegt worden, die Art der Befestigung erkennen zu lassen, so daß auch der Laie sich ein Urteil über das mit großer Sorgfalt konstruierte Produkt bilden konnte, so kann bei anderen ästhetischen Vorstellungen der Wunsch bestehen, daß im Bereich des Firmenmarkenzeichens keine Elemente der Befestigungsmittel wahrgenommen werden können sollen.

Aus der deutschen Patentschrift DE 4 101 514 C2 ist eine Blende aus rostfreiem Stahlblech oder aus Kunststoff bekannt, die eine Bearbeitungsöffnung, - den Freiraum zwischen den Brückenfingern -, vollständig abdeckt. Diese Blende kann beispielsweise mittels Halteklammern auf eine Belaghaltefeder aufgeschnappt werden oder an einem Noppen oder in einer Bohrung der äußeren Belagträgerplatte befestigt werden.

Aus der europäischen Patentanmeldung EP 1 146 245 A2 ist eine Festsattelbremse mit vier Zylindern bekannt, die mit einem Firmenmarkenzeichen versehen ist. Das Firmenmarkenzeichen ist auf einem Deckel angebracht. Dieser Deckel hat in etwa eine zu den beiden Betätigungszylindern komplementäre Form. Er wird auf diese aufgerastet oder auch aufgeklebt. Auch kann der Deckel auf der radial äußeren Seite der Bremse in eine Nut in der Außenfläche der Betätigungszylinder eingehakt und mit der radial inneren Seite an der Festsattelbremse verschraubt sein.

Aus dem deutschen Gebrauchsmuster DE 1 773 309 ist eine schraubenlose Befestigung von Bezeichnungsschildern bekannt. Die Bezeichnungsschilder selbst können aus Massivmetall mit eingeprägter Bezeichnung oder auch aus Kunsstoff gefertigt sein. Mit dem Bezeichnungsschild kann beispielsweise ein Federblechkranz oder eine tulpenförmige Federblechbuchse verbunden sein, der bzw. die das Bezeichnungsschild in einer Bohrung einer Gehäusewandung halten.

In der französischen Offenlegungsschrift FR 2 629 528 A1 ist ein Verfahren beschrieben, ein Markenschild zu befestigen, wobei das Markenschild wenigstens einen massiven Dorn aufweist, der an seinem Umfang dünne Längsvorsprünge aufweist, die aus einem härteren Material bestehen als das Material der Bohrung, in die der Dorn getrieben wird. Desweiteren kann eine Zwischenplatte vorgesehen werden, die in einer Ansenkung der Befestigungswand lagert und mit einem geschlitzten, federnden, hohlen Zapfen in einer Bohrung der Befestigungswand gehalten ist, und deren eine den Grund der Ansenkung berührende Fläche und deren andere die Rückseite des Markenschildes berührende Fläche zueinander keilförmig verlaufen, das Markenschild in Bezug auf die Befestigungswand geneigt befestigbar ist. Der Dorn des Markenschildes wird in die Höhlung des Zapfens getrieben und dort klemmend gehalten. Auch können an den Längsvorsprüngen der Dorne Zähne ausgebildet sein, um diese Dorne noch sicherer in den Löchern zu verankern.

Aus der deutschen Offenlegungsschrift DE 2 430 659 A1 ist eine Vorrichtung zur Halterung von Bremsklötzen von Scheibenbremsen bekannt, bei der in einer Bohrung des Bremssattels eine mit einem flanschartigen Ring versehene, im übrigen mit Schlitzen versehene, ösenartige Federklammer eingeklemmt ist. Der mittlere Abschnitt der Federklammer ist ballig nach innen gewölbt. Der Belaghaltestift wird in diese Wölbung der Federklammer eingedrückt und durch ihr Anpressen in seiner Lage gehalten.

Aus der DE 10 2004 048 436 A1 ist eine Steckhülse zur Befestigung eines Bauteils in einer Bohrung bekannt, die mit zumindest einem über den Außenumfang der Steckhülse vorstehenden Rastarm zur Lagesicherung in der Bohrung und mit zumindest einem in das der Steckhülse vorstehenden Haltearm zur Halterung des Bauteils versehen ist. Die Rastarme und die Haltearme sind in Umfangsrichtung der Steckhülse zueinander beabstandet angeordnet.

Die DE 101 19 130 A1 beschreibt eine diebstahlsichere Befestigung eines Markenemblems an einer klappbaren Haube eines Kraftfahrzeugs. Zu diesem Zweck weist das Markenemblem einen Befestigungsstift auf, der in eine Aufnahmetülle eingebracht wird. Die Aufnahmetülle hintergreift formschlüssig einen Schulterabschnitt einer Einnlethülse, die in einer Durchgangsöffnung der Haube eingesetzt ist.

Eine zylindrisch ausgebildete Montagebüchse, die eine Vielzahl in radialer Richtung nach außen gebogene Vorsprünge aufweist, ist in der DE 88 15 130 U1 beschrieben. Die Vorsprünge dienen als Anschlagelemente, wenn die Büchse in einen Montagesitz eingeschoben wird. Die Büchse umfasst ferner eine Vielzahl viereckiger Öffnungen, wobei in jeder Öffnung eine länglich ausgebildete federelastische Zunge angeordnet ist. Jede dieser Zungen ist konvex- oder konkavförmig gewölbt oder gebogen, wobei die konkave oder konvexe Seite jeweils nach außen gerichtet ist und dazu dient, im montierten Zustand elastisch gegen eine Aufnahmewand des Montagesitzes gedrückt zu werden, wenn beispielsweise ein stabförmiger elektromagnetischer Sensor darin eingeführt wird. Die unterschiedlich gebogenen Zungen vermeiden dabei ein Herausrutschen der Büchse aus ihrem Sitz.

Aus der US 6,257,536 B1 ist ein Befestigungsschild bekannt, dessen Befestigungsstifte einen durchgängigen Schlitz aufweisen, die Toleranzen in Bezug auf die Größe eines Aufnahmeloches ausgleichen.

Eine Anschlussvorrichtung für Rohrleitungen ist in der DE 198 03 918 A1 beschrieben. Die Anschlussvorrichtung umfasst ein in einer Aufnahmebohrung eines Gehäuseteils anzuordnendes Halteelement mit über den Umfang verteilt angeordneten Klammerelementen 10. Jedes Klammerelement weist auf seiner zur Halterung der Rohrleitung dienenden Ende gegenüberliegenden Seite ein zungenartig ausgebildetes, sich schräg in Löserichtung und radial nach außen gegen die Innenumfangsfläche der Aufnahmebohrung erstreckendes Arretierelement auf. Bei einem Versuch, die Rohrleitung aus der Aufnahmebohrung zu ziehen, wird das Klammerelement derart gedreht, dass das gegenüberliegende Arretierelement stärker in Eingriff mit der Innenumfangsfläche der Aufnahmebohrung tritt. Überdies weist das Halteelement über den Umfang gleichmäßig verteilt angeordnete Haltezungen auf, die sich jeweils widerhakenartig schräg nach außen gegen die Innenumfangsfläche der Aufnahmebohrung erstrecken. Zum Herausnehmen der Rohrleitung aus der Aufnahmebohrung wird ein Löseelement verwendet, das die Klammerelemente in radialer Richtung aufspreizt.

Aufgabe der Erfindung ist es, ein Befestigungsmittel vorzusehen, mit Hilfe dessen ein gegossenes Firmenmarkenzeichen so an den Brückenfingern eines Schwimmsattels einer Schwimmsattel-Teilbelag-Scheibenbremse befestigt werden kann, dass das Befestigungsmittel von außen nicht sichtbar ist. Des weiteren betrifft die Erfindung eine Scheibenbremse, an der ein Firmenmarkenzeichen mit Hilfe des Befestigungsmittels befestigt ist sowie ein Verfahren zum Ausgleichen von Fertigungstoleranzen von in einer Scheibenbremse vorgesehener Bohrungen sowie an einem Firmenmarkenzeichen angeordneter Zapfen.

Gelöst werden diese Aufgaben gemäß der Erfindung durch die Merkmalskombinationen der Ansprüche 1, 7 und 11.

An dem einzigen Ausführungsbeispiel wird die Erfindung näher erläutert.

### Kurze Beschreibung der Zeichnungen

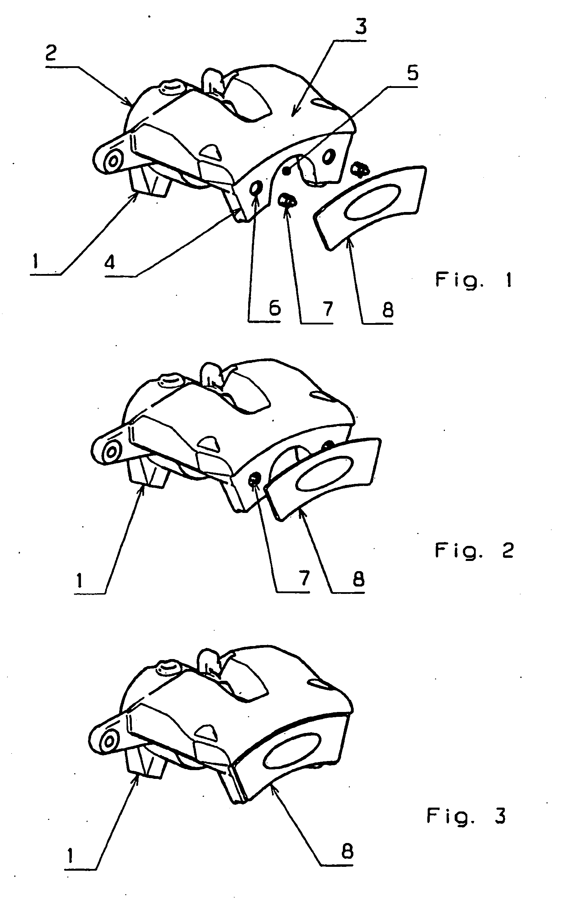

- Fig. 1:: einen Schwimmsattel, zwei Blechfedern und ein Firmenmarkenzeichen in perspektivischer Darstellung,
- Fig. 2:: den Schwimmsatttel mit montierten Blechfedern und das Firmenmarkenzeichen in perspektivischer Darstellung,
- Fig. 3:: den Schwimmsattel mit montiertem Firmenmarkenzeichen in perspektivischer Darstellung,

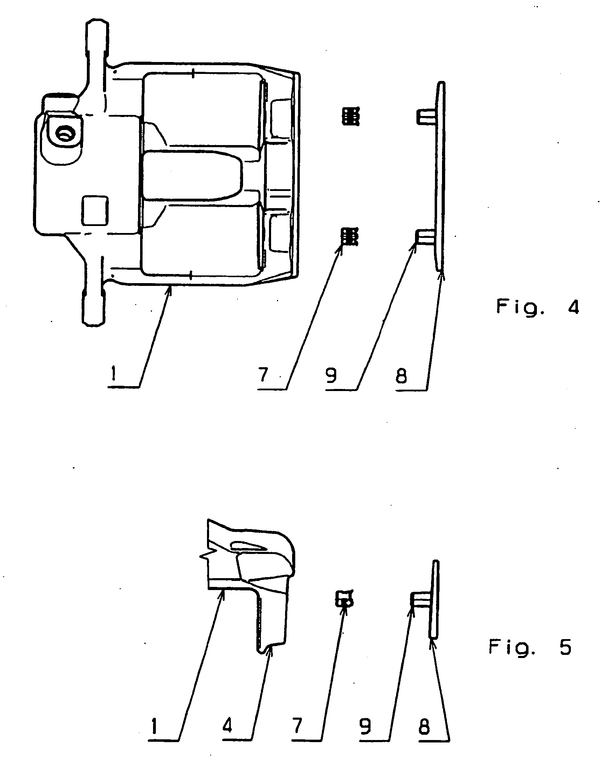

- Fig. 4: eine Draufsicht auf den Schwimmsattel, die Blechfedern und das Firmenmarkenzeichen,
- Fig. 5:: eine Seitenansicht auf einen Teil des Schwimmsattels, auf eine der Blechfedern und auf das Firmenmarkenzeichen,
- Fig. 6:: das Firmenmarkenzeichen in drei Ansichten,
- Fig. 7:: das Firmenmarkenzeichen in zwei perspektivischen Dartsellungen,
- Fig. 8:: die Blechfeder in einer Schnittdarstellung,
- Fig. 9:: die Blechfeder in Seitenansicht,
- Fig. 10:: die Blechfeder in perspektivischer Darstellung,
- Fig. 11:: einen Teilschnitt durch den Brückenfinger und die Blechfeder, wobei die Blechfeder in die Bohrung eingelegt, aber noch nicht verpreßt ist,
- Fig. 12:: einen Teilschnitt durch den Brückenfinger und die Blechfeder, wobei die Blechfeder in die Bohrung eingepreßt ist,
- Fig. 13:: einen Teilschnitt durch den Brückenfinger, die Blechfeder, den Zapfen und das Firmenmarkenzeichen, wobei der Zapfen in die Blechfeder gedrückt ist.

### Beschreibung einer bevorzugten Ausführungsform der Erfindung

Der Schwimmsattel 1 weist einen Betätigungszylinder 2, eine Brücke 3 und Brückenfinger 4 auf. Die Brückenfinger 4 gehören zu dem Bereich der Bremse, der durch die Radfelge, sofern sie denn Speichen hat und nicht eine geschlossen Stahlfelge ist, sichtbar ist. Zwischen den beiden Brückenfingern 4 befindet sich eine Bearbeitungsöffnung 5 zur mechanischen Bearbeitung des Betätigundszylinders 2.

In diese Brückenfinger 4 werden Bohrungen 6 eingebracht. In diese Bohrungen werden Blechfedern 7 eingepreßt. In diese Blechfedern wird das Firmenmarkenzeichen 8 mit seinen beiden Zapfen 9 eingedrückt.

Das Firmenmarkenzeichen 8 ist als Druckgußteil ausgeführt. Vorzugsweise enthält die Legierung eine hohen Anteil an Silizium, wodurch ein Gießen filigraner Teile, wie dies bei Firmenmarkenzeichen der Fall sein kann, ermöglicht wird. Da die Druckgußteile sehr spröde sein können, können sie nicht ohne weiteres durch plastisches Umformen, beispielsweise durch Vernieten der Zapfen, befestigt werden.

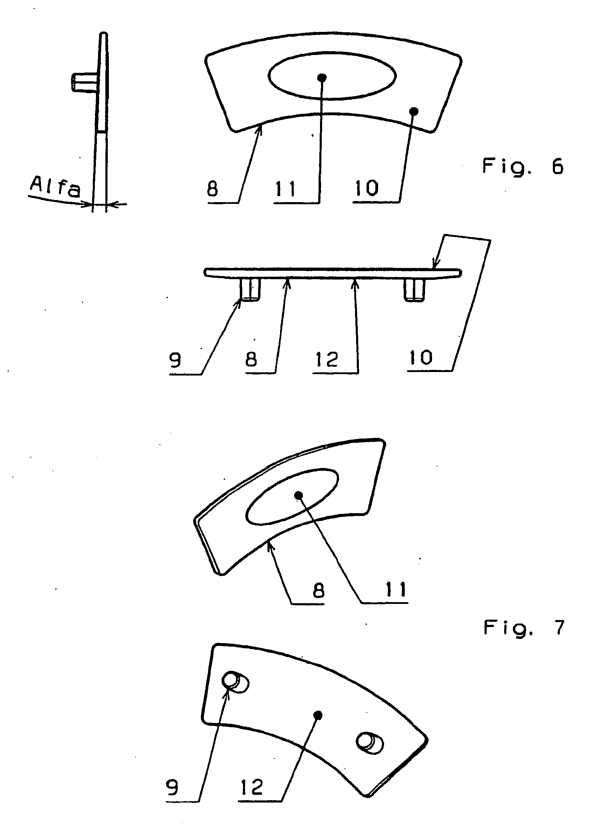

Das Firmenmarkenzeichen 8 ist von grundsätzlich ebener Gestalt, wobei die Vorderseite 10 das Emblem 11 aufweist, und die Rückseite 12 zwei Zapfen 9 zur Befestigung des Firmenmarkenzeichens an den Brückenfingern 4 trägt. Vorderseite 10 und Rückseite 12 verlaufen im Allgemeinen zumindest annähernd parallel zueinander. Allerdings kann von diesem parallelen Verlauf dann abgewichen werden, wenn beispielsweise eine Gussschräge, die Formschräge, die bei etwa zwei Grad liegt, ausgeglichen werden soll. Ist der Schwimmsattel als Schmiedeteil ausgeführt, so entfällt das Ausgleichen, da hierbei praktisch keine Formschräge erforderlich ist. Der Winkel Alpha beträgt Null Grad. Ist jedoch beabsichtigt, daß der Blick des Betrachters möglichst senkrecht auf das Firmenmarkenzeichen fällt, so kann die Vorderseite entsprechend angestellt werden. Soll dazu auch noch eine Formschräge ausgeglichen werden, dann kann das Abweichen von der Parallelität auch etwas größer werden. In der Figur 6 zeigt die Seitenansicht eine solche Abweichung von der Parallelität.

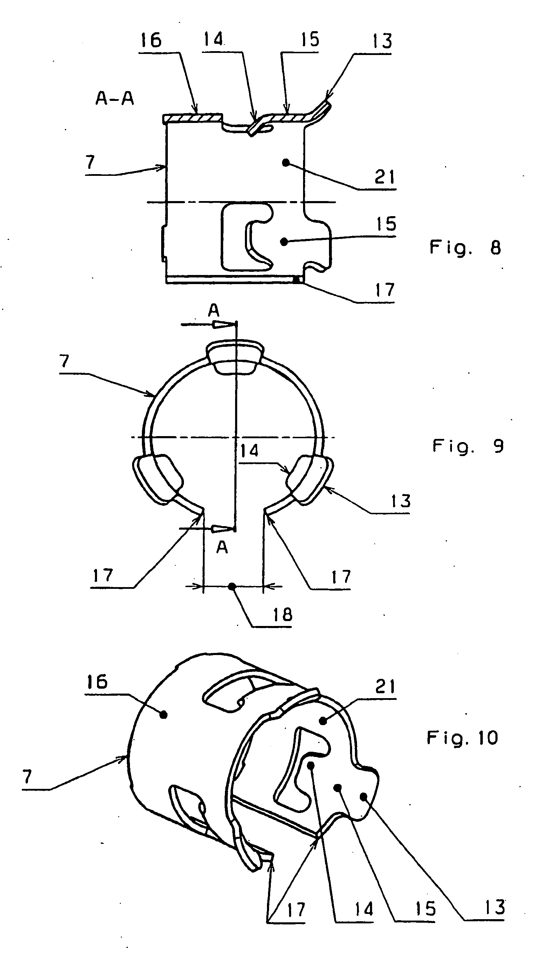

Die Figuren 8 bis 10 zeigen die Blechfeder 7. Die Blechfeder 7 wird aus einem Bandstahlblech ausgestanzt, die Federarme 13, 14 werden gebogen, und das Rohteil wird gerollt. Der Grundkörper 16 ist von zylindrischer Gestalt, wobei die Enden 17 reichlich voneinander Abstand 18 haben. Der Abstand 18 beträgt etwa ein Sechstel des Umfanges. Gleichmäßig am Umfang verteilt befinden sich drei Paare Federarme 13, 14. Die Federarme 13 sind nach außen und die Federarme 14 sind nach innen gebogen. Der Biegewinkel beträgt etwa 45 Grad. Die Blechfeder 7 ist aus einem rostfreien Federstahlblech hergestellt, wobei die Blechstärke etwa 0,4 mm beträgt.

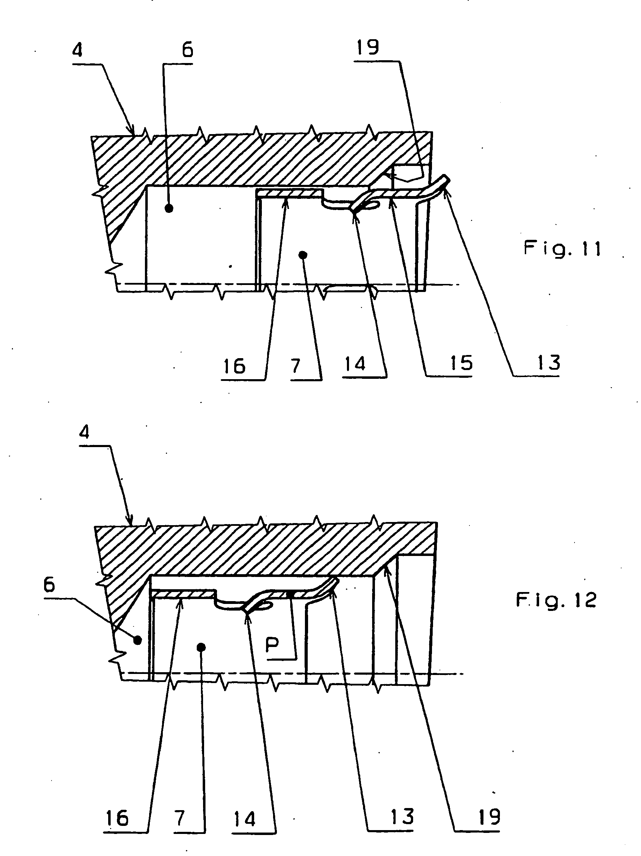

Die Figuren 11 bis 13 zeigen den Zusammenbau des Schwimmsattels 1, der Blechfeder 7 und des Firmenmarkenzeichens 8. Die Blechfeder 7 wird in die Bohrung 6 des Brückenfingers 4 eingelegt. Der Außendurchmesser des Grundkörpers 16 der Blechfeder 7 ist geringfügig, etwa 0,4 mm, geringer als der Durchmesser der Bohrung 6. Die Blechfeder 7 läßt sich soweit in die Bohrung 6 einlegen, bis die äußeren Federarme 13 an einer Anphasung 19 anliegen, wie in Fig. 11 zu sehen ist.

Nun wird mittels eines Domes die Blechfeder 7 in die Bohrung 6 getrieben (Fig. 12). Hierbei verbiegen sich die äußeren Federarme 13 nur sehr wenig. Sie übertragen die Kraft auf den Grundkörper 16. Der Grundkörper 16 vermindert dadurch seinen Außendurchmesser, und die Enden 17 nähern sich bis auf einen Abstand, der nahezu gleich Null ist. Die Enden 17 sind weiterhin geringfügig zueinander beabstandet. Es wird keine Umfangskraft des einen Endes 17 auf das andere Ende 17 übertragen. Damit behält der Grundkörper im Wesentlichen seine runde und zylindrische Form bei.

Der Übergangsbereich 21 überträgt die Kraft von dem äußeren Federarm 13 auf den Grundkörper 16. Dabei verbiegt sich der Steg 15 minimal um den Punkt P und der innere Federarm 14 schwenkt etwas nach außen.

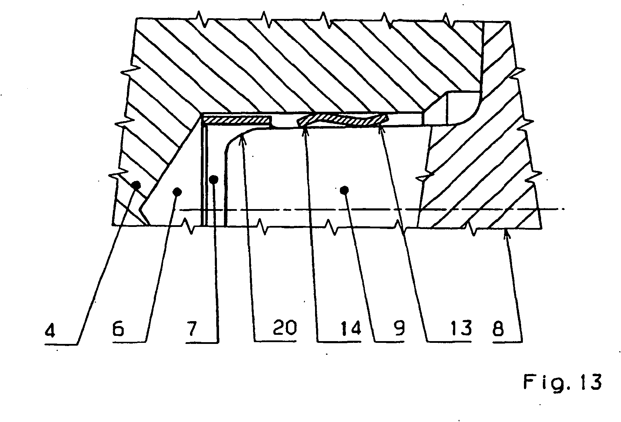

Des Firmenmarkenzeichen 8 kann nun in den Schwimmsattel 1 eingesetzt werden. Gemäß der Figur 13 wird nun der Zapfen 9 in die Blechfeder 7 eingebracht.

Um dieses Einbringen zu erleichtern, ist der Zapfen 9 mit einer Anphasung 20 versehen. Die Anphasung 20 verläuft vorzugsweise in einem Winkel von 30 Grad zur Mittelachse des Zapfens 9. Die Übergänge der Anphasung 20 sind zu der Stirnfläche und zu der Mantelfläche des Zapfens 9 durch einen Übergangsradius gerundet.

Bei dem Einbringen des Zapfens 9 in die Blechfeder 7 drückt der Zapfen 9 den Übergangsbereich 21 radial etwas auseinander. Dann gelangt der Zapfen 9 in den Bereich des inneren Federarmes 14. Der Federarm 14 schwenkt dabei um den Punkt P radial nach außen, bis er an der Wand der Bohrung 6 anliegt und sich dort abstützt. Ein weiteres Einschieben des Zapfens 9 bewirkt, daß der innere Federarm 14 sich weiter aufbiegt, wobei das Drehen um den Punkt P die Klemmkraft des Übergangsbereiches 21 des äußeren Federarmes 13 erhöht. Desweiteren drückt der Zapfen 9 den Grundkörper 16 auf, wobei die Enden 17 ihren Abstand zueinander vergrößern.

Die Zapfen 9 werden soweit in die Blechfedern 7 eingedrückt, bis das Firmenmarkenzeichen 8 mit seiner Rückseite 12 an den Brückenfingern 4 anliegt. Die Montage ist damit abgeschlossen.

Da das Firmenmarkenzeichen als Druckgußkonstruktion ausgeführt wurde, und die Legierung sehr spröde sein kann, dürfen keine nennenswerten Biegekräfte auf die Zapfen 9 wirken. Um die Fertigungstoleranzen des Abstandes der Bohrungen 6 in den Brückenfingern 4 und die Abstandstoleranzen der Zapfen 9 in den Griff zu bekommen, ist der Außendurchmesser des Grundkörpers 16 der Blechfeder 7 vorsorglich kleiner gehalten als der Durchmesser der Bohrungen 6. Gleichwohl die Zapfen 9 mittels der Federarme 13, 14 gehalten werden, und die Federarme 13, 14 die Blechfedern 7 in den Bohrungen 6 halten, ist eine minimale Federung in Umfangsrichtung und damit ein minimaler Toleranzausgleich möglich, und die Gefahr, daß die Zapfen 9 abbrechen, beseitigt.

Durch die Erfindung kann auch ein sehr siliziumhaltiges Firmenmarkenzeichen schraubenlos befestigt werden. Insbesondere kann dem Rechnung getragen werden, daß im sichtbaren Bereich des Firmenmarkenzeichens keine Elemente der Befestigungsmittel, wie beipielsweise Schraubenköpfe, Nietköpfe oder auch Kleber oder Klebefolie wahrgenommen werden können.

### Bezugszeichenliste

- 1: Schwimmsattel
- 2: Betätigungszylinder
- 3: Brücke
- 4: Brückenfinger
- 5: Bearbeitungsöffnung
- 6: Bohrungen
- 7: Blechfeder
- 8: Firmenmarkenzeichen
- 9: Zapfen
- 10: Vorderseite
- 11: Emblem
- 12: Rückseite
- 13: äußerer Federarm
- 14: innerer Federarm
- 15: Steg
- 16: Grundkörper
- 17: Enden
- 18: Abstand
- 19: Anphasung
- 20: Anphasung
- 21: Übergangsbereich
- P: Punkt P

## Patentansprüche

1. Scheibenbremse, insbesondere eine Schwimmsattel-Teilbelag-Scheibenbremse, mit einem in einer Bohrung (6) der Scheibenbremse eingesetzten Federelement (7) und einem Firmenmarkenzeichen (8), das zwei eben ausgebildete Seitenflächen (10, 12) und mindestens einen auf der Seitenfläche (12) angeordneten Zapfen (9) aufweist, der in das Federelement (7) eingebracht ist, wobei das Federelement (7) einen zylindrischen Grundkörper (16) und Federarme (13, 14) aufweist, von denen ein erster Federarm (14) in radialer Richtung nach innen und ein zweiter Federarm (13) in radialer Richtung nach außen gebogen ist, und wobei die Federarme (13, 14) über einen Steg (15) derart verbunden sind, dass beim Einschieben des Zapfens (9) in das Federelement (7) eine radial nach außen gerichtete Bewegung des ersten Federarmes (14) eine radial nach innen gerichtete Bewegung des zweiten Federarmes (13) bewirkt, und wobei die Federarme (13, 14) derart ausgebildet sind, dass im befestigten Zustand des Zapfens (9) in der Bohrung (6) der erste Federarm (14) und der zweite Federarm (13) sich jeweils im klemmenden Eingriff mit der Wand der Bohrung (6) und dem Zapfen (9) befinden.

2. Scheibenbremse nach Anspruch 1, **dadurch gekennzeichnet, dass** der Biegewinkel der Federarme (13, 14) 45 Grad beträgt.

3. Scheibenbremse nach Anspruch 1 oder 2, **dadurch gekennzeichnet, dass** der Grundkörper (16) einen in axialer Richtung des Grundkörpers (16) verlaufenden Schlitz aufweist.

4. Scheibenbremse nach Anspruch 3, **dadurch gekennzeichnet, dass** der Schlitz über die gesamte axiale Länge des Grundkörpers (16) verläuft.

5. Scheibenbremse nach einem der Ansprüche 1 bis 4, **dadurch gekennzeichnet, dass** der Grundkörper (16) drei Federarmpaare (13, 14) aufweist, die in Umfangsrichtung des Grundkörpers (16) gleichmäßig zueinander beabstandet angeordnet sind.

6. Scheibenbremse nach einem der Ansprüche 1 bis 5, **dadurch gekennzeichnet, dass** das Federelement eine federelastisch ausgebildete Blechfeder (7) ist.

7. Scheibenbremse nach einem der Ansprüche 1 bis 6, **dadurch gekennzeichnet, dass** der Außendurchmesser des Grundkörpers (16) des Federelementes (7) kleiner als der Durchmesser der Bohrung (6) ist, und das in die Bohrung (6) eingesetzte Federelement (7) mittels der Federarme (13, 14) elastisch in der Bohrung (6) verspannt ist, und dass der Zapfen (9) des Firmenmarkenzeichens (8) durch die Federarme (13, 14) elastisch gehalten ist.

8. Scheibenbremse nach einem der Ansprüche 1 bis 7, **dadurch gekennzeichnet, dass** die Seitenflächen (10, 12) des Firmenmarkenzeichens (8) nicht parallel zueinander verlaufen.

9. Scheibenbremse nach Anspruch 8, **dadurch gekennzeichnet, dass** die Seitenflächen (10, 12) des Firmenmarkenzeichens (8) einen Winkel von 2° einschließen.

10. Verfahren zum Ausgleichen von Fertigungstoleranzen von in einer Scheibenbremse, insbesondere einer Schwimmsattel-Teilbelag-Scheibenbremse, gemäß einem der Ansprüche 1 bis 9 vorgesehener Bohrungen (6) sowie von an einer Seitenfläche (12) eines Firmenmarkenzeichens (8) angeordneter Zapfen (9), bei dem in die Bohrungen (6) der Scheibenbremse jeweils ein Federelement (7) eingesetzt wird, und bei dem der Unterschied des Abstandes der Bohrungen (6) zu dem Abstand der Zapfen (9) **dadurch** ausgeglichen wird, dass der Außendurchmesser des Grundkörpers (16) jedes der in die Bohrungen (6) eingesetzten Federelemente (7) kleiner als der Durchmesser der entsprechenden Bohrung (6) ist, und dass die Federelemente (7) mittels der Federarme (13, 14) elastisch in den Bohrungen (6) verspannt und die Zapfen (9) des Firmenmarkenzeichens (8) mittels der Federarme (13, 14) elastisch gehalten werden.

## Claims

1. A disc brake, in particular a sliding calliper spot-type disc brake, comprising a spring element (7) inserted in a bore (6) of the disc brake and a company emblem (8), which is provided with two plane side faces (10, 12) and at least one pin (9) that is disposed on the side face (12) and inserted into the spring element (7), said spring element (7) having a cylindrical base body (16) and spring arms (13, 14), a first spring arm (14) of which is bent in radial direction inwardly and a second spring arm (13) is bent in radial direction outwardly, and the spring arms (13, 14) being connected via a web (15) such that when the pin (9) is inserted into the spring element (7), a radially outwardly directed movement of the first spring arm (14) effects a radially inwardly directed movement of the second spring arm (13), and the spring arms (13, 14) being configured such that in the fixed state of the pin (9) in the bore (6) both the first spring arm (14) and the second spring arm (13) are in clamping engagement with the wall of the bore (6) and the pin (9).

2. Disc brake according to claim 1, **characterized in that** the bend angle of the spring arms (13, 14) is 45°.

3. Disc brake according to claim 1 or 2, **characterized in that** the base body (16) is provided with a slot extending in the axial direction of the base body (16).

4. Disc brake according to claim 3, **characterized in that** the slot extends over the entire axial length of the base body (16).

5. Disc brake according to one of claims 1 to 4, **characterized in that** the base body (16) comprises three pairs of spring arms (13, 14) that are disposed in the circumferential direction of the base body (16) so as to be equally spaced from each other.

6. Disc brake according to one of claims 1 to 5, **characterized in that** the spring element is a sheet metal spring (7) of resilient design.

7. Disc brake according to one of claims 1 to 6, **characterized in that** the outer diameter of the base body (16) of the spring element (7) is smaller than the diameter of the bore (6), and the spring element (7) inserted in the bore (6) is resiliently braced in the bore by means of the spring arms (13, 14), and that the pin (9) of the company emblem (8) is resiliently held by the spring arms (13, 14).

8. Disc brake according to one of claims 1 to 7, **characterized in that** the side faces (10, 12) of the company emblem (8) do not extend in parallel with each other.

9. Disc brake according to claim 8, **characterized in that** the side faces (10, 12) of the company emblem (8) include an angle of 2°.

10. A method of compensating for manufacturing tolerances of bores (6) provided in a disc brake, in particular a sliding calliper spot-type disc brake, according to one of claims 1 to 9, as well as of pins (9) disposed on a side face (12) of a company emblem (8), in which method one spring element (7) each is inserted in the bores (6) of the disc brake, and in which the difference of the distance of the bores (6) from the distance of the pins (9) is compensated in that the outer diameter of the base body (16) of each of the spring elements (71) inserted in the bores (6) is smaller than the diameter of the corresponding bore (6), and that the spring elements (7) are resiliently braced in the bores (6) by means of the spring arms (13, 14) and the pins (9) of the company emblem (8) are resiliently held by means of the spring arms (13, 14).

## Revendications

1. Frein à disque, notamment un frein à disque à étrier flottant à garnitures partielles, comprenant un élément ressort (7) inséré dans un alésage (6) du frein à disque et une plaquette de marque de fabrique (8), laquelle présente deux faces latérales (10, 12) conçues planes et au moins un tenon (9) disposé sur la face latérale (12) et inséré dans l'élément ressort (7), l'élément ressort (7) présentant un corps de base cylindrique (16) et des bras ressorts (13, 14), dont un premier bras ressort (14) est replié vers l'intérieur dans la direction radiale et un deuxième bras ressort (13) est replié vers l'extérieur dans la direction radiale, et les bras ressorts (13, 14) étant reliés par une branche (15) de telle sorte qu'un mouvement du premier bras ressort (14) dirigé radialement vers l'extérieur entraîne un mouvement du second bras ressort (13) dirigé radialement vers l'intérieur lorsque le tenon (9) est introduit dans l'élément ressort (7), et les bras ressorts (13, 14) étant conçus de telle sorte qu'à l'état fixé du tenon (9) dans l'alésage (6), le premier bras ressort (14) et le deuxième bras ressort (13) sont chacun en prise serrante avec la paroi de l'alésage (6) et le tenon (9).

2. Frein à disque selon la revendication 1, **caractérisé en ce que** l'angle de pliage des bras ressorts (13, 14) est de 45 degrés.

3. Frein à disque selon la revendication 1 ou 2, **caractérisé en ce que** le corps de base (16) présente une fente s'étendant dans la direction axiale du corps de base (16).

4. Frein à disque selon la revendication 3, **caractérisé en ce que** ladite fente s'étend sur toute la longueur axiale du corps de base (16).

5. Frein à disque selon l'une des revendications 1 à 4, **caractérisé en ce que** le corps de base (16) présente trois paires de bras ressorts (13, 14) disposées circonférentiellement à distance égale les unes par rapport aux autres.

6. Frein à disque selon l'une des revendications 1 à 5, **caractérisé en ce que** l'élément ressort est un ressort en tôle (7) conçu de manière à faire ressort.

7. Frein à disque selon l'une des revendications 1 à 6, **caractérisé en ce que** le diamètre extérieur du corps de base (16) de l'élément ressort (7) est inférieur au diamètre de l'alésage (6) et l'élément ressort (7) inséré dans l'alésage (6) est précontraint de manière élastique dans l'alésage (6) au moyen des bras ressorts (13, 14), et **en ce que** le tenon (9) de la plaquette de marque de fabrique (8) est maintenue de manière élastique par les bras ressorts (13, 14).

8. Frein à disque selon l'une des revendications 1 à 7, **caractérisé en ce que** les faces latérales (10, 12) de la plaquette de marque de fabrique (8) ne s'étendent pas parallèlement l'une à l'autre.

9. Frein à disque selon la revendication 8, **caractérisé en ce que** les faces latérales (10, 12) de la plaquette de marque de fabrique (8) délimitent un angle de 2°.

10. Procédé visant à compenser les tolérances de fabrication des alésages (6) prévus dans un frein à disque, notamment un frein à disque à étrier flottant à garnitures partielles, conformément à l'une des revendications 1 à 9, et celles des tenons (9) disposés sur une face latérale (12) d'une plaquette de marque de fabrique (8), dans le cadre duquel un élément ressort (7) est inséré dans chacun des alésages (6) du frein à disque et la différence entre l'espacement des alésages (6) et l'espacement des tenons (9) est compensée par le fait que le diamètre extérieur du corps de base (16) de chacun des éléments ressorts (7) insérés dans les alésages (6) est inférieur au diamètre de l'alésage (6) correspondant, et que les éléments ressorts (7) sont précontraints de manière élastique dans les alésages (6) au moyen des bras ressorts (13, 14) et les tenons (9) de la plaquette de marque de fabrique (8) maintenus de manière élastique par les bras ressorts (13, 14).
